(19) Europäisches Patentamt
European Patent Office
Office européen des brevets

(11) **EP 4 246 385 A1**

(12) **EUROPEAN PATENT APPLICATION**

(43) Date of publication:
**20.09.2023 Bulletin 2023/38**

(21) Application number: **22382238.8**

(22) Date of filing: **14.03.2022**

(51) International Patent Classification (IPC):
**G06N 10/60** *(2022.01)*

(52) Cooperative Patent Classification (CPC):
**G06N 10/60;** G06N 10/20

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **IQM Finland Oy**
  **02150 Espoo (FI)**

• **University of the Basque Country**
  **48940 Leioa Bizkaia (ES)**

(72) Inventors:
• **MARTIN, Ana**
  **Bilbao (ES)**
• **SANZ, Mikel**
  **Bilbao (ES)**

(74) Representative: **Berggren Oy**
  **P.O. Box 16**
  **Eteläinen Rautatiekatu 10A**
  **00101 Helsinki (FI)**

(54) **QUANTUM PROCESSING UNIT**

(57) The invention is in the field of quantum computing, specifically a quantum processing unit optimized for performing an all-quantum Harrow-Hassidim-Lloyd algorithm. The quantum processing unit includes a single ancilla qubit directly connected to each qubit in a group of register qubits, and a group of memory qubits connected to the group of register qubits such that least one of the memory qubits is directly connected to at least one of the register qubits.

**FIG. 3**

**Description**

**Technical Field**

The invention relates to the field of quantum computing and more specifically to a quantum processing unit.

**Background**

In the current noisy intermediate-scale quantum (NISQ) era, quantum processors are not sufficiently robust against noise sources to handle algorithms with arbitrary depth, therefore limiting the depth of algorithms that can be effectively implemented. Furthermore, certain gates, such as SWAP gates, are extremely expensive in terms of quantum resources since they are not native and must be decomposed into other native entangling gates.

The quantum algorithm for linear systems of equations, also referred to as the Harrow-Hassidim-Lloyd (HHL) algorithm, is a quantum algorithm for solving systems of linear equations by estimating the result of a scalar measurement on the solution vector for a system of linear equations. The algorithm was first described in A. W. Harrow, A. Hassidim, and S. Lloyd, "Quantum Algorithm for Linear Systems of Equations," Phys. Rev. Lett., vol. 103, no. 15, p. 150502, (2009).

For a Hermitian N × N density matrix A and unit vector $|b\rangle$, which represent a system of linear equations such that $A |x\rangle = |b\rangle$, where $|x\rangle$ is the solution vector, the algorithm can be summarized as follows:

1. Representing the vector $|b\rangle$ as a quantum state $|b\rangle = \sum_{i=1}^{N} b_i |i\rangle$

2. Using the quantum phase estimation algorithm is used to decompose $|b\rangle$ into the eigenbasis of A described by eigenvectors $|u_j\rangle$ and find the corresponding eigenvalues $\lambda_j$. The state of the system after the decomposition is approximately $\sum_{j=1}^{N} \beta_j |u_j\rangle |\lambda_j\rangle$.

3. Performing a linear map taking $|\lambda_j\rangle$ to $C \lambda_j^{-1} |\lambda_j\rangle$, where C is a normalizing constant.

4. Uncomputing the $|\lambda_j\rangle$ register leaving a state proportional to $\sum_{j=1}^{N} \beta_j \lambda_j^{-1} |u_j\rangle = A^{-1} |b\rangle = |x\rangle$.

Methods for preparing the state $|b\rangle$ in the qubits are described, for example, Grover, L., & Rudolph, T. (2002), "Creating superpositions that correspond to efficiently integrable probability distributions".

Prior methods for implementing the HHL algorithm rely on combining classical and quantum computation to sequentially perform different steps of the method. For example, one previous hybrid implementation is described in Lee, Y., Joo, J. & Lee, S. "Hybrid quantum linear equation algorithm and its experimental test on IBM Quantum Experience", Sci. Rep. 9, 4778, (2019).

Disadvantages of the hybrid implementation include the need to repeat the first quantum step and measurement multiple times in order to estimate the probability distribution of the measurement outcomes to input to the classical step.

**Summary of the Invention**

A first aspect of the invention relates to a quantum processing unit for carrying out an approximate HHL algorithm, the quantum processing unit comprising an ancilla qubit, a plurality of register qubits, and a plurality of memory qubits. The ancilla qubit is connected only to the plurality of register qubits and the plurality of memory qubits is connected only to the plurality of register qubits. The ancilla qubit is connect to all of the register qubits in the plurality of register qubits.

The HHL algorithm solves a system of linear equations defined by $A|x\rangle = |b\rangle$, where $|x\rangle$ is the solution vector, matrix A defines the coefficients and $|b\rangle$ defines the constant terms, and the quantum processing unit may be configured to store the constant terms $|b\rangle$ and the solution vector $|x\rangle$ in the plurality of memory qubits, encode the $n_R$-binary representation of the eigenvalues of A in the plurality of register qubits, where $n_R$ is the number of register qubits, and store the inverse of the eigenvalues of A in the ancilla qubit.

The quantum processing unit may be further configured to:

- initialize the ancilla qubit and each of the register qubits to the $|0\rangle$ state and initialize the memory qubits to a state $|b\rangle$ representing the constant terms;
- apply a quantum phase estimation algorithm to the register qubits and memory qubits in order to decompose $|b\rangle$ in the eigenbasis of A and find the corresponding eigenvalues;
- perform a linear map codifying the inverse of the eigenvalues $\lambda_j$ into the amplitude of the ancilla qubit by applying a plurality of single qubit gates and a plurality of controlled quantum gates to the ancilla qubit, each controlled quantum gate rotating the quantum state of the ancilla qubit around the *y*-axis depending on the state of one of the register qubits;

- apply an inverse quantum phase estimation algorithm to uncompute the estimate eigenvalues stored in the register qubits; and
- measure the ancilla qubit in the Z-axis to determine whether linear map was successful.

Each of the memory qubits in the plurality of memory qubits may be directly connected to one other memory qubit in the plurality of memory qubits.

One of the memory qubits in the plurality of memory qubits may be connected to all of the register qubits in the plurality of register qubits. Alternatively, one of the memory qubits in the plurality of memory qubits may be connected to a subgroup of the register qubits in the plurality of register qubits.

The register qubits may be interconnected such that all of the register qubits are connected directly or indirectly via other register qubits.

The register qubits may be interconnected such that the register qubits and connections between register qubits form a two-degree chain.

The ancilla qubit, each register qubit in the plurality of register qubits and each memory qubit in the plurality of memory qubits may be logical qubits, where each logical qubit comprises one or more physical qubits.

The logical ancilla qubit may comprise at least two physical ancilla qubits and each physical ancilla qubit may be connected to the other physical ancilla qubit or qubits, either directly or indirectly via one or more other physical ancilla qubits.

A second aspect of the invention method of performing an approximate HHL algorithm for a system of linear equations defined by $A|x\rangle = |b\rangle$, where $|x\rangle$ is the solution vector, matrix A defines the coefficients and $|b\rangle$ defines the constant terms, the method using the quantum processing unit of any of claims 1 to 10 and comprising:

- initializing the ancilla qubit and each of the register qubits to the $|0\rangle$ state and initialize the memory qubits to a state $|b\rangle$, which represents the constant terms;
- applying a quantum phase estimation algorithm to the register qubits and memory qubits in order to decompose $|b\rangle$ in the eigenbasis of A and find the corresponding eigenvalues $\lambda_j$;
- performing a linear map codifying the inverse of the eigenvalues $\lambda_j$ into the amplitude of the ancilla qubit by applying a plurality of single qubit gates and a plurality of controlled quantum gates to the ancilla qubit, each controlled quantum gate rotating the quantum state of the ancilla qubit around the $y$-axis depending on the state of one of the register qubits;
- applying an inverse quantum phase estimation algorithm to uncompute the estimated eigenvalues stored in the register qubits; and
- measuring the ancilla qubit in the Z-axis to determine whether linear map was successful.

A third aspect of the invention relates to a hybrid classical-quantum computer system comprising a classical processing unit and the quantum processing unit according to the first aspect of the invention, the classical processing unit being configured to apply control signals to the quantum processing unit to cause the quantum processing unit to perform the method of the second aspect.

A fourth aspect of the invention relates to a computer program product comprising instructions which, when executed by a computer, cause the computer to perform the method of the second aspect.

A fifth aspect of the invention relates to a computer-readable medium comprising instructions which, when executed by a computer, cause the computer to perform the method of the second aspect.

**Brief Description of the Drawings**

Figure 1    A quantum circuit diagram showing a quantum circuit for performing the Harrow-Hassidim-Lloyd algorithm for linear systems of equations.

Figure 2    A flow chart depicting a method for performing the Harrow-Hassidim-Lloyd algorithm on a quantum computer.

Figure 3    A quantum processing unit comprising a kite-shaped qubit topology for performing the Harrow-Hassidim-Lloyd algorithm.

Figure 4    A quantum processing unit with a kite-shaped qubit topology, showing physical and logical qubits.

**Detailed Description of the Invention**

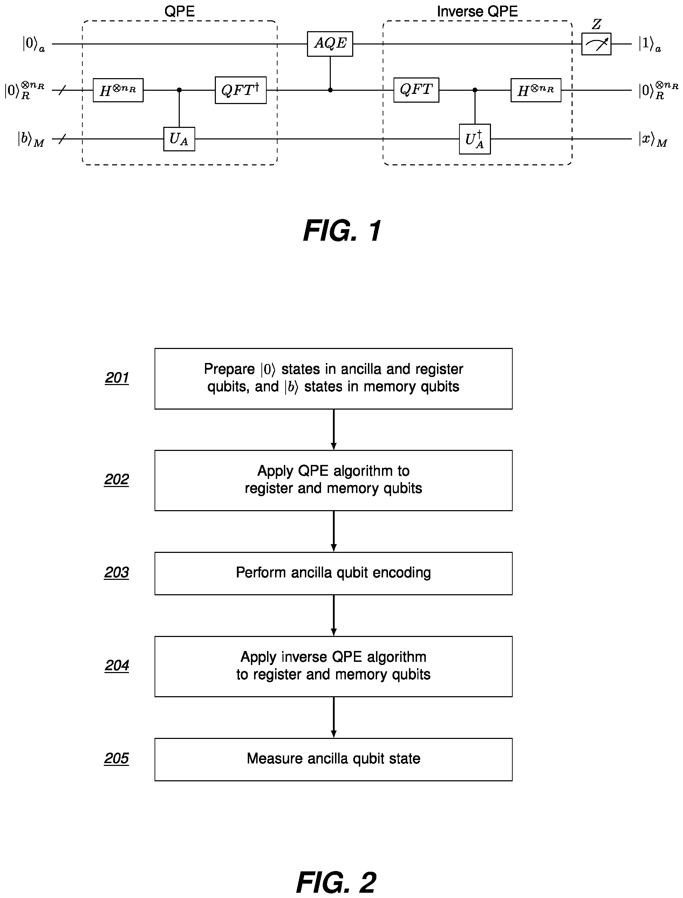

Figure 1 shows a quantum circuit diagram showing a quantum circuit for performing the Harrow-Hassidim-Lloyd (HHL) algorithm, which is a quantum algorithm for solving linear systems of equations. The quantum wires are denoted $|0\rangle_a$, corresponding to an ancilla qubit $a$, $|0\rangle_R^{\otimes n_R}$, corresponding to $n_R$ register qubits R, and $|b\rangle_M$, corresponding to memory qubits M. The circuit of Figure 1 includes a quantum phase estimation (QPE) block, an ancilla quantum encoding (AQE) block an inverse QPE block, and a final measurement. The algorithm and circuit are explained in more detail with respect to Figure 2.

On a general level, the algorithm starts by initializing the ancilla qubit and each of the register qubits in the $|0\rangle$ state and initializing the memory qubits in the state $|b\rangle$, which represents the constant terms. Next, a quantum phase estimation algorithm is applied to the register qubits and memory qubits in order to express $|b\rangle$ in the eigenbasis of A and map the corresponding eigenvalues $\lambda_j$ in binary form, into the register qubits. A linear map is then performed, the linear map codifying the inverse of the eigenvalues $\lambda_j$ into the amplitude of the ancilla qubit $a$. In the prior art, this step has been performed using a classical computer, but in the present invention the step is performed by applying a plurality of register-controlled gates to the ancilla qubit $a$, each register-controlled gate rotating the quantum state of the ancilla qubit around the $y$-axis depending on the state of one of the register qubits. After performing the linear map, also referred to as ancilla qubit encoding, the inverse quantum phase estimation algorithm is applied to uncompute the eigenvalues $\lambda_j$ stored in the register qubits. Finally, the ancilla qubit is measured in the Z-axis to determine whether linear map was successful.

Figure 2 is a flow diagram depicting a method for performing the Harrow-Hassidim-Lloyd (HHL) algorithm on a quantum computer. The method of Figure 2 is a full quantum implementation of the algorithm, i.e. there is no need to simplify the problem or to perform some of the steps of the algorithm on a classical computer. The HHL algorithm is used to solve systems of linear equations. Systems of linear equations can be defined by $A|x\rangle = |b\rangle$, where $|x\rangle$ is the solution vector, matrix A defines the coefficients and $|b\rangle$ defines the constant terms

At step 201, the quantum states of the ancilla qubit and each of the register qubits are initialized to the $|0\rangle$ state, and the quantum states of the memory qubits are initialized to states $|b\rangle$, where $|b\rangle = \sum_{i=1}^{N} b_i |i\rangle$. Each of the terms $b_i|i\rangle$ of state $|b\rangle$ corresponds to one of the constant terms $b_i$ of the linear system of equations and an orthonormal set of state $|i\rangle$. $N$ is the dimension of the matrix A, which defines the problem coefficients. The state $|b\rangle$ may be prepared by, for example, following the process described in Grover, L., & Rudolph, T. (2002), "Creating superpositions that correspond to efficiently integrable probability distributions".

At step 202, a quantum phase estimation algorithm is applied to the register and memory qubits. Quantum phase estimation is described in detail in Chapter 5, part 5.2 of "Quantum Computation and Quantum Information", Michael Nielsen & Isaac Chuang, ISBN 978-1-107-00217-3. Following quantum phase estimation, the state of the system is

$$|0\rangle_a \otimes \sum_{j=1}^{N} \sum_{k=0}^{2^{n_R}-1} \alpha_j \beta_{jk} \left|\tilde{\lambda}_k\right\rangle_R \otimes \left|u_j\right\rangle_m$$

where $|u_j\rangle_m$ is the eigenbasis of matrix $A$, $|b\rangle = \sum_{j=1}^{N} \alpha_j |u_j\rangle$, $\tilde{\lambda}_k \equiv k/2^{n_R}$ and

$$\beta_{jk} = \frac{1}{2^{n_R}} \sum_{y=0}^{2^{n_R}-1} e^{2\pi i y \left(\lambda_j - \frac{k}{2^{n_R}-1}\right)}$$

Essentially, following the application of QPE, the register qubits encode the phase of the eigenvalues of the matrix A or a good estimate thereof when the phase cannot be written exactly with an $n_R$ bit binary expansion. The eigenvalues $\tilde{\lambda}_k$ are an approximation of the $n_R$-bit estimation of the true eigenvalues $\lambda_j$, due to the truncation in the $H_{AQE}$ Hamiltonian discussed below.

At step 203, ancilla qubit encoding (AQE) is performed. AQE requires a linear map codifying the inverse of the eigenvalues $\lambda_j$ into the amplitude of the ancilla qubit $a$ to be performed. AQE is implemented by decomposing the linear map into sets of two controlled quantum gates $cU$ and $cW$. Both gates perform controlled rotations around the $y$-axis on the ancilla qubit depending on the state of one or more register qubits. The rotation can be diagonalized as:

$$R_y(\Omega) = V \begin{pmatrix} e^{-i\Omega/2} & 0 \\ 0 & e^{-i\Omega/2} \end{pmatrix} V^\dagger$$

where V is the diagonalization matrix:

$$V = \frac{1}{\sqrt{2}} \begin{pmatrix} -i & i \\ 1 & 1 \end{pmatrix}$$

and $\Omega$ is a rotation angle that takes different values depending on the quantum gate: for the $n_R$ $cU$ gates, the rotation angles $\Omega \equiv \theta(j)$ are given by:

$$\theta(j) = 2 \arcsin\left(\frac{1}{2^{n_R-j}}\right)$$

with $j = 1 \dots n_R$. For the $2^{n_R} - n_R - 1$ $cW$ gates, the rotation angles $\Omega \equiv \omega(\vec{b})$ are given by:

$$\omega(\vec{b}) = -2\sum_{l=1}^{n_R} \arcsin\left(\frac{b_l}{2^{n_R-l}}\right) + 2\arcsin\left(\frac{1}{\sum_{l=1}^{n_R} b_l 2^{l-1}}\right)$$

if $\vec{b} \in \mathcal{B}$ , where $\vec{b} = (b_1, b_2, ..., b_{n_R})$ is a vector that represents the state of the register qubits, and

$$\mathcal{B} = \left\{\vec{b}\colon \exists\, l_1 \neq l_2 \;/\; b_{l_1} = b_{l_2} = 1\right\}$$

i.e. the set of binary vectors that contains at least two 1s, and if $\vec{b} \notin \mathcal{B}$, $\omega(\vec{b}) = 0$. The complete action of these multi-qubit gates $cU$ and $cW$ can be described in terms of their corresponding Hamiltonians $H_U$ and $H_W$, since $cU = e^{-iH_U}$ and $cW = e^{-iH_W}$:

$$H_U = \sum_{j=1}^{n_R} -\frac{\theta(j)}{4} \sigma_Z \otimes \mathbb{I}^{\otimes(j-1)} \otimes (\mathbb{I} - \sigma_Z) \otimes \mathbb{I}^{\otimes(n_R-j)}$$

$$H_W = -\sum_{\vec{\alpha}=0}\sum_{\vec{b}\in\mathcal{B}} \frac{\omega(\vec{b})}{2^{n_R+1}} (-1)^{\vec{b}\vec{\alpha}} \sigma_Z \otimes \sigma_{\alpha_1} \otimes \dots \otimes \sigma_{\alpha_{n_R}}$$

The complete AQE Hamiltonian is the sum of these two Hamiltonians since $U_{AQE} = e^{-iH_{AQE}} = e^{-i(H_U+H_W)}$ and can be written as:

$$H_{AQE} = \left[\sum_{j=1}^{n_R} -\frac{\theta(j)}{4} - \sum_{\vec{b}\in\mathcal{B}} \frac{\omega(\vec{b})}{2^{n_R+1}}\right] \sigma_Z \otimes \mathbb{I}^{\otimes n_R} + \left[\sum_{j=1}^{n_R} -\frac{\theta(j)}{4} - \sum_{j=1}^{n_R}\sum_{\vec{b}\in\mathcal{B}} \frac{\omega(\vec{b})}{2^{n_R+1}} (-1)^{b_j}\right] \sigma_Z \otimes \mathbb{I}^{\otimes(j-1)} \otimes \sigma_Z$$

$$\otimes\, \mathbb{I}^{\otimes(n_R-j)} + \left[\sum_{\vec{\alpha},\vec{b}\in\mathcal{B}} \frac{-\omega(\vec{b})}{2^{n_R+1}} (-1)^{\vec{b}\vec{\alpha}}\right] \sigma_Z \otimes \sigma_{\alpha_1} \otimes \dots \otimes \sigma_{\alpha_{n_R}}$$

from which it can be seen that the contribution of the final term of the above equation decreases exponentially with the number of register qubits $n_R$, while the first two terms converge to a constant with the number of register qubits $n_R$. The three-or-more body terms of the Hamiltonian $H_{AQE}$, which are those in the final term of the above equations, can therefore be ignored for sufficiently large $n_R$, preferably $n_R \geq \log_2 (\dim A)$. As a result, the AQE can be implemented with only single and two-qubit gates according to the following equation:

$$\widetilde{H}_{AQE} = \left[ \sum_{j=1}^{n_R} -\frac{\theta(j)}{4} + \sum_{\vec{b} \in \mathcal{B}} \frac{\omega(\vec{b})}{2^{n_R+1}} \right] \sigma_Z \otimes \mathbb{I}^{\otimes n_R}$$

$$+ \sum_{j=1}^{n_R} \left[ -\frac{\theta(j)}{4} - \sum_{\vec{b} \in \mathcal{B}} \frac{\omega(\vec{b})}{2^{n_R+1}} (-1)^{b_j} \right] \sigma_Z \otimes \mathbb{I}^{\otimes(j-1)} \otimes \sigma_Z \otimes \mathbb{I}^{\otimes(n_R-j)}$$

At step 204, an inverse QPE algorithm is applied to the register and memory qubits, after which the state of the system is approximately

$$\sum_{j=1}^{N} \sum_{k=0}^{2^{n_R}-1} \left( \sqrt{1-\frac{C^2}{\widetilde{\lambda}_k^2}} \, |0\rangle_a + \frac{C}{\widetilde{\lambda}_k} |1\rangle_a \right) \otimes |0\rangle_R \otimes \alpha_j \, |u_j\rangle_M$$

and the vector state representing the solution of the linear system of equations may be stored in the memory qubits. In order to determine the success of the operation, the ancilla qubit is measured in the Z-axis at step 205. If the state of the ancilla qubit is $|1\rangle_a$, then the state of the memory qubits

$$\frac{1}{C} \sum_{j=1}^{N} \frac{\alpha_j}{\widetilde{\lambda}_k} \, |u_j\rangle_M$$

successfully represents the solution of the system of linear equations.

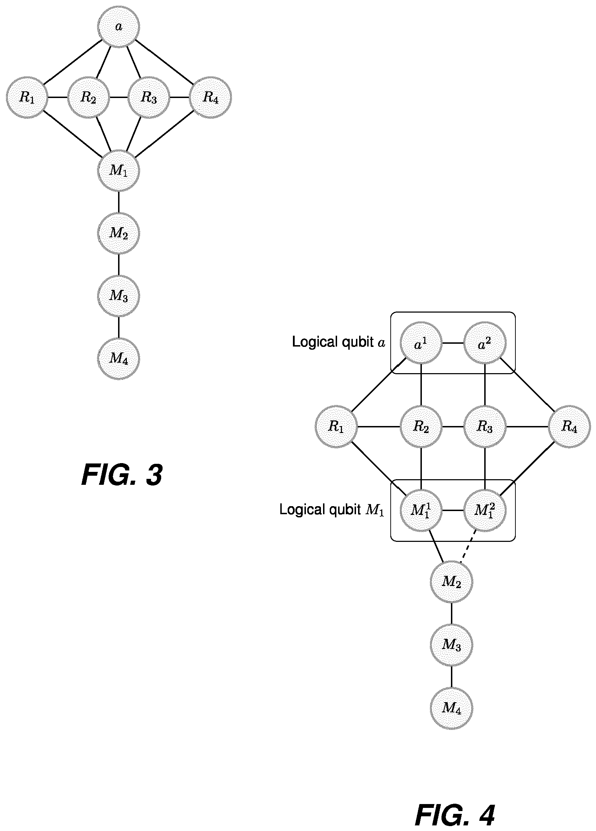

Figure 3 depicts a kite-shaped qubit topology for a quantum processing unit (QPU) adapted for performing the method described above. The QPU includes an ancilla qubit $a$, a group of register qubits $R_1$ to $R_{n_R}$, and a group of memory qubits $M_1$ to $M_{n_M}$. The ancilla qubit $a$ is connected only to the register qubits $R_1$ to $R_{n_R}$ and is connected directly to all of the register qubits. The register qubits are connected to each other, either directly or indirectly via other register qubits. At least one of the memory qubits $M_1$ to $M_{n_M}$ is connected to one of the register qubits $R_1$ to $R_{n_R}$.

While Figure 3 shows a topology with four register qubits $R_1$ to $R_4$ and four memory qubits $M_1$ to $M_4$, it will be appreciated that the number of register and memory qubits may be varied almost arbitrarily within the physical constraints of qubit manufacturing techniques, as long as the number of register qubits $n_R$ is greater than or equal to the number of memory qubits $n_M$. The number of memory qubits $n_M$ should be at least $\log_2 (\dim A)$, where A is the matrix encoding the problem, along with the constant terms of $|b\rangle$. Further, as explained above, the accuracy of the quantum phase estimation algorithm is limited by the number of register qubits $n_R$, since the register qubits encode the estimated eigenvalues in a binary form across the qubits. The minimum number of register qubits should therefore also be $\log_2 (\dim A)$, where A is the matrix encoding the problem, along with the constant terms of $|b\rangle$.

Figure 3 depicts the arrangement of memory qubits in a two-degree chain, i.e. where every memory qubit, except for the first and last in the chain, is connected to two other member qubits. This arrangement allows a reduction in connectivity between the memory qubits.

For the purpose of the quantum phase estimation algorithm at step 202 and the inverse quantum phase estimation algorithm at step 203 of the method of Figure 2, it is sufficient to have a single connection between the memory qubits and the register qubits. However, additional connections between the memory qubits and register qubits, such as connecting the at least on memory qubit to all of the register qubits, may allow for more efficient preparation of the state $|b\rangle$ and better performance of the controlled operations in the quantum phase estimation.

The arrangement of the register qubits in Figure 3 is also presented as a two-degree chain, when considering the connections between register qubits only. However, the register qubits may be arranged in any suitable way, for example with a specific topology to optimise the quantum Fourier transform step of the quantum phase estimation algorithm, as long as full direct connectivity between the register qubits and the ancilla qubit, and connection of at least one register qubit to at least on memory qubit is maintained.

Since it is impractical to connect arbitrarily large numbers of qubits to a single qubit, which is essential for the ancilla qubit *a* and preferably for at least one of the member qubits $M_1$ shown in Figure 3, each of the qubits shown in Figure 3 may be seen as a logical qubit, which is made up of one or more interconnected physical qubits. Throughout the application, wherever qubits are referred to, they should be considered to be logical qubits made up of one or more interconnected physical qubits unless explicitly stated otherwise.

An example of the use of logical qubits is shown in Figure 4, in which the ancilla qubit *a* of Figure 3 is a logical qubit made up of two physical qubits $a^1$ and $a^2$, and the memory qubit $M_1$ is a logical qubit made up of two physical qubits $M_1^1$ and $M_1^2$. The other qubits shown in Figure 4, while not explicitly marked as logical qubits, may also be logical qubits made up of one or more physical qubits.

The external connections of the logical qubits *a* and $M_1$, i.e. their connections to register qubits $R_1$ to $R_4$, are shared between the physical qubits such that physical qubits $a^1$ and $M_1^1$ are independently connected to register qubits $R_1$ and $R_2$ and physical qubits $a^2$ and $M_1^2$ are independently connected to register qubits $R_3$ and $R_4$. It is not necessary that physical qubits $a^1$ and $M_1^1$ be connected to the same register qubits, nor that physical qubits $a_2$ and $M_1^2$ be connected to the same register qubits as depicted in Figure 4. While, the splitting up of the external connections of the logical qubits *a* and $M_1$ is unlikely to be necessary in a QPU with four register qubits and four memory qubits, as shown in Figure 4, this illustrative example shows how such an arrangement could be used to enable higher numbers of connections to a single logical qubit than would be possible with a single physical qubit.

## Claims

1.  A quantum processing unit for carrying out a HHL algorithm, the quantum processing unit comprising:

    - an ancilla qubit;
    - a plurality of register qubits; and
    - a plurality of memory qubits;
    wherein the ancilla qubit is connected only to the plurality of register qubits and the plurality of memory qubits is connected only to the plurality of register qubits, and wherein the ancilla qubit is connect to all of the register qubits in the plurality of register qubits.

2.  The quantum processing unit of claim 1, wherein the HHL algorithm solves a system of linear equations defined by $A|x\rangle = |b\rangle$, where $|x\rangle$ is the solution vector, matrix A defines the coefficients and $|b\rangle$ defines the constant terms, and wherein the quantum processing unit is configured to:

    - store the constant terms $|b\rangle$ and the solution vector $|x\rangle$ in the plurality of memory qubits;
    - encode the $n_R$-binary representation of the eigenvalues of A in the plurality of register qubits, where $n_R$ is the number of register qubits; and
    - store the inverse of the eigenvalues of A in the ancilla qubit.

3.  The quantum processing unit of claim 2, wherein the quantum processing unit is further configured to:

    - initialize the ancilla qubit and each of the register qubits to the $|0\rangle$ state and initialize the memory qubits to a state $|b\rangle$ representing the constant terms;
    - apply a quantum phase estimation algorithm to the register qubits and memory qubits in order to decompose $|b\rangle$ in the eigenbasis of A and find the corresponding eigenvalues;
    - perform a linear map codifying the inverse of the eigenvalues $\lambda_j$ into the amplitude of the ancilla qubit by applying a plurality of single qubit gates and a plurality of controlled quantum gates to the ancilla qubit, each controlled quantum gate rotating the quantum state of the ancilla qubit around the *y*-axis depending on the state of one of the register qubits;
    - apply an inverse quantum phase estimation algorithm to uncompute the estimate eigenvalues stored in the register qubits; and
    - measure the ancilla qubit in the Z-axis to determine whether linear map was successful.

4.  The quantum processing unit of any preceding claim, wherein each of the memory qubits in the plurality of memory qubits is directly connected to one other memory qubit in the plurality of memory qubits.

5. The quantum processing unit of claim 4, wherein one of the memory qubits in the plurality of memory qubits is connected to all of the register qubits in the plurality of register qubits.

6. The quantum processing unit of claim 4, wherein one of the memory qubits in the plurality of memory qubits is connected to a subgroup of the register qubits in the plurality of register qubits.

7. The quantum processing unit of any preceding claim, wherein the register qubits are interconnected such that all of the register qubits are connected directly or indirectly via other register qubits.

8. The quantum processing unit of claim 7, wherein the register qubits are interconnected such that the register qubits and connections between register qubits form a two-degree chain.

9. The quantum processing unit of any preceding claim, wherein the ancilla qubit, each register qubit in the plurality of register qubits and each memory qubit in the plurality of memory qubits are logical qubits, and wherein each logical qubit comprises one or more physical qubits.

10. The quantum processing unit of claim 9, wherein the logical ancilla qubit comprises at least two physical ancilla qubits and wherein each physical ancilla qubit is connected to the other physical ancilla qubit or qubits, either directly or indirectly via one or more other physical ancilla qubits.

11. A method of performing an approximate HHL algorithm for a system of linear equations defined by $A|x\rangle = |b\rangle$, where $|x\rangle$ is the solution vector, matrix A defines the coefficients and $|b\rangle$ defines the constant terms, the method using the quantum processing unit of any of claims 1 to 10 and comprising:

    - initializing the ancilla qubit and each of the register qubits to the $|0\rangle$ state and initialize the memory qubits to a state $|b\rangle$, which represents the constant terms;
    - applying a quantum phase estimation algorithm to the register qubits and memory qubits in order to decompose $|b\rangle$ in the eigenbasis of A and find the corresponding eigenvalues $\lambda_j$;
    - performing a linear map codifying the inverse of the eigenvalues $\lambda_j$ into the amplitude of the ancilla qubit by applying a plurality of single qubit gates and a plurality of controlled quantum gates to the ancilla qubit, each controlled quantum gate rotating the quantum state of the ancilla qubit around the *y*-axis depending on the state of one of the register qubits;
    - applying an inverse quantum phase estimation algorithm to uncompute the estimated eigenvalues stored in the register qubits; and
    - measuring the ancilla qubit in the Z-axis to determine whether linear map was successful.

12. A hybrid classical-quantum computer system comprising a classical processing unit and the quantum processing unit of any of any of claims 1 to 10, wherein the classical processing unit configured to apply control signals to the quantum processing unit to cause the quantum processing unit to perform the method of claim 11.

13. A computer program product comprising instructions which, when executed by a computer, cause the computer to perform the method of claim 11.

14. A computer-readable medium comprising instructions which, when executed by a computer, cause the computer to perform the method of claim 11.

QPE

Inverse QPE

$|0\rangle_a$ —————————————— $AQE$ ——————————— $Z$ —— $|1\rangle_a$

$|0\rangle_R^{\otimes n_R}$ —— $H^{\otimes n_R}$ — $QFT^\dagger$ ———————— $QFT$ — $H^{\otimes n_R}$ —— $|0\rangle_R^{\otimes n_R}$

$|b\rangle_M$ ————— $U_A$ ———————————— $U_A^\dagger$ ——————— $|x\rangle_M$

## FIG. 1

201 — Prepare $|0\rangle$ states in ancilla and register qubits, and $|b\rangle$ states in memory qubits

202 — Apply QPE algorithm to register and memory qubits

203 — Perform ancilla qubit encoding

204 — Apply inverse QPE algorithm to register and memory qubits

205 — Measure ancilla qubit state

## FIG. 2

**FIG. 3**

**FIG. 4**

Europäisches Patentamt

European Patent Office

Office européen des brevets

# EUROPEAN SEARCH REPORT

Application Number

EP 22 38 2238

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHENGBIN WANG ET AL: "Quantum Fast Poisson Solver: the algorithm and modular circuit design", ARXIV.ORG, CORNELL UNIVERSITY LIBRARY, 201 OLIN LIBRARY CORNELL UNIVERSITY ITHACA, NY 14853, 22 October 2019 (2019-10-22), XP081518843, * abstract * * figure 1 * * sections III.A, III.B, IV, V * | 1-14 | INV. G06N10/60 |
| X | MANUELA WEIGOLD ET AL: "Encoding patterns for quantum algorithms", IET QUANTUM COMMUNICATION, JOHN WILEY & SONS, INC, HOBOKEN, USA, vol. 2, no. 4, 10 December 2021 (2021-12-10), pages 141-152, XP006113887, ISSN: 2632-8925, DOI: 10.1049/QTC2.12032 * abstract * * sections 3.3, 4 * * figure 10 * | 1-14 | |

TECHNICAL FIELDS SEARCHED (IPC)

G06N

The present search report has been drawn up for all claims

| Place of search | Date of completion of the search | Examiner |
|---|---|---|
| The Hague | 29 August 2022 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. W. HARROW ; A. HASSIDIM ; S. LLOYD.** Quantum Algorithm for Linear Systems of Equations. *Phys. Rev. Lett.,* 2009, vol. 103 (15), 150502
- **GROVER, L. ; RUDOLPH, T.** *Creating superpositions that correspond to efficiently integrable probability distributions,* 2002
- **LEE, Y. ; JOO, J. ; LEE, S.** Hybrid quantum linear equation algorithm and its experimental test on IBM Quantum Experience. *Sci. Rep.,* 2019, vol. 9, 4778
- **MICHAEL NIELSEN ; & ISAAC CHUANG.** Quantum Computation and Quantum Information